(19) **Europäisches Patentamt European Patent Office Office européen des brevets**

(11) **EP 4 412 195 A1**

(12) **EUROPEAN PATENT APPLICATION**
published in accordance with Art. 153(4) EPC

(43) Date of publication:
07.08.2024 Bulletin 2024/32

(21) Application number: 22874788.7

(22) Date of filing: 23.09.2022

(51) International Patent Classification (IPC):
$H04N\ 19/105^{(2014.01)}$    $H04N\ 19/593^{(2014.01)}$

(52) Cooperative Patent Classification (CPC):
H04N 19/105; H04N 19/159; H04N 19/593

(86) International application number:
PCT/CN2022/120855

(87) International publication number:
WO 2023/051402 (06.04.2023 Gazette 2023/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.09.2021 CN 202111165824

(71) Applicant: Vivo Mobile Communication Co., Ltd.
Dongguan, Guangdong 523863 (CN)

(72) Inventors:
• ZHOU, Chuan
  Dongguan, Guangdong 523863 (CN)
• LV, Zhuoyi
  Dongguan, Guangdong 523863 (CN)

(74) Representative: Conti, Marco
Bugnion S.p.A.
Via di Corticella, 87
40128 Bologna (IT)

(54) **INTRA-FRAME PREDICTION METHOD AND TERMINAL**

(57) This application discloses an intra-frame prediction method and a terminal, and relates to the technical field of video coding and decoding standards. The intra-frame prediction method includes: determining a prediction sample corresponding to a prediction block based on an angle prediction mode corresponding to the prediction block; and modifying the prediction sample by using a position dependent intra prediction combination PDPC, to generate a modified prediction sample, where the modifying the prediction sample by using a position dependent intra prediction combination includes: obtaining texture information of a reference sample set corresponding to a first angle prediction mode, the first angle prediction mode being an angle prediction mode corresponding to the prediction block, and the reference sample set including at least one reference sample; determining a second angle prediction mode according to the texture information; and modifying the prediction sample according to a target reference sample corresponding to the angle prediction mode.

FIG. 4

**Description**

**CROSS-REFERENCE TO RELATED APPLICATIONS**

This application claims the priority of Chinese Patent Application No. 202111165824.0 filed in China on September 30, 2021, which is incorporated herein by reference in its entirety.

**TECHNICAL FIELD**

This application relates to the technical field of video coding and decoding standards, and specifically, to an intra-frame prediction method and a terminal.

**BACKGROUND**

In the versatile video coding (versatile video coding, VVC) standard, a prediction sample corresponding to a prediction block is usually modified by using a position dependent intra prediction combination (position dependent intra prediction combination, PDPC) method, to improve accuracy of intra-frame prediction.
In the related art, in the PDPC method, a prediction sample and a first reference sample are determined based on an angle prediction mode corresponding to the prediction block, and 180 degrees are added to or subtracted from a first prediction angle corresponding to the first angle prediction mode of the first reference sample based on the prediction sample, to obtain a second prediction angle corresponding to a second reference sample. Then, the prediction sample is modified according to the first reference sample and the second reference sample, to obtain a modified prediction sample. However, the modified prediction sample obtained by using the PDPC method has low accuracy.

**SUMMARY**

Embodiments of this application provide an intra-frame prediction method and a terminal, which can resolve a problem that a modified prediction sample obtained by using an existing PDPC method has low accuracy.
According to a first aspect, an intra-frame prediction method is provided, including:

determining a prediction sample corresponding to a prediction block based on an angle prediction mode corresponding to the prediction block; and
modifying the prediction sample by using a position dependent intra prediction combination PDPC, to generate a modified prediction sample, where
the modifying the prediction sample by using a position dependent intra prediction combination includes:
obtaining texture information of a reference sample set corresponding to a first angle prediction mode, the first angle prediction mode being an angle prediction mode corresponding to the prediction block, and the reference sample set including at least one reference sample;
determining a second angle prediction mode according to the texture information; and
modifying the prediction sample according to a target reference sample corresponding to the second angle prediction mode.

According to a second aspect, a decoder is provided, including:

a first determining module, configured to determine a prediction sample corresponding to a prediction block based on an angle prediction mode corresponding to the prediction block; and
a processing module, configured to modify the prediction sample by using a position dependent intra prediction combination PDPC, to generate a modified prediction sample, where
the processing module includes:

an obtaining module, configured to obtain texture information of a reference sample set corresponding to a first angle prediction mode, the first angle prediction mode being an angle prediction mode corresponding to the prediction block, and the reference sample set including at least one reference sample;
a second determining module, configured to determine a second angle prediction mode according to the texture information; and
a modification module, configured to modify the prediction sample according to a target reference sample corresponding to the second angle prediction mode.

According to a third aspect, a terminal is provided, including a processor, a memory, and a program or instructions stored in the memory and executable on the processor, the program or instructions, when executed by the processor, implementing the steps of the method according to the first aspect.

According to a fourth aspect, a readable storage medium is provided. The readable storage medium stores a program or instructions, the program or instructions, when executed by the processor, implementing the steps of the method according to the first aspect.

According to a fifth aspect, a chip is provided, including a processor and a communication interface, where the communication interface is coupled to the processor, and the processor is configured to run a program or instructions to implement the steps of the method according to the first aspect.

According to a sixth aspect, a computer program/program product is provided, where the computer program/program product is stored in a non-volatile storage medium, and the computer program/program product is executed by at least one processor to implement the steps of the method according to the first aspect.

According to a seventh aspect, a communication device is provided, configured to perform the steps of the method according to the first aspect.

In the embodiments of this application, the texture information of the reference sample set corresponding to the first angle prediction mode is obtained, the second angle prediction mode is determined according to the texture information, and a prediction angle corresponding to the second angle prediction mode is determined as the second prediction angle instead of obtaining the second prediction angle by adding or subtracting 180 degrees based on the first prediction angle corresponding to the first angle prediction mode. Further, the prediction sample is modified according to the target reference sample corresponding to the second angle prediction mode, so that the prediction sample is modified by using the second angle prediction mode determined based on the texture information, which improves accuracy of a modified prediction sample.

## BRIEF DESCRIPTION OF THE DRAWINGS

FIG. 1 is a schematic diagram of a mapping relationship between an angle mode and an offset value according to an embodiment of this application;

FIG. 2 is a schematic diagram of a prediction angle according to an embodiment of this application;

FIG. 3 is a diagram of an application scenario of an existing PDPC method;

FIG. 4 is a flowchart of an intra-frame prediction method according to an embodiment of this application;

FIG. 5 is a diagram of an application scenario of an existing decoder-side intra mode derivation (decoder-side intra mode derivation, DIMD) method;

FIG. 6 is a diagram of an application scenario of a PDPC method according to an embodiment of this application;

FIG. 7 is a structural diagram of a decoder according to an embodiment of this application;

FIG. 8 is a structural diagram of a communication device according to an embodiment of this application; and

FIG. 9 is a schematic structural diagram of hardware of a terminal according to an embodiment of this application.

## DETAILED DESCRIPTION

The following clearly describes the technical solutions in the embodiments of this application with reference to the accompanying drawings in the embodiments of this application. Apparently, the described embodiments are some rather than all of the embodiments of this application. All other embodiments obtained by a person of ordinary skill in the art based on the embodiments of this application fall within the protection scope of this application.

In the specification and the claims of this application, the terms "first", "second", and so on are intended to distinguish similar objects but do not necessarily indicate a specific order or sequence. It is to be understood that the term used in such a way is interchangeable in proper circumstances, so that the embodiments of this application can be implemented in other sequences than the sequence illustrated or described herein. In addition, the objects distinguished by "first", "second", and the like are usually of one type, and a quantity of objects is not limited, for example, there may be one or more first objects. In addition, "and/or" used in the specification and the claims represents at least one of the connected objects, and a character "/" in this specification generally indicates an "or" relationship between the associated objects.

A decoder corresponding to an intra-frame prediction method in the embodiments of this application may be a terminal. The terminal may also be referred to as a terminal device or a user equipment (user equipment, UE). The terminal may be a terminal side device such as a mobile phone, a tablet personal computer (tablet personal computer), a laptop computer (laptop computer) or notebook computer, a personal digital assistant (personal digital assistant, PDA), a palmtop computer, a notebook, an ultra-mobile personal computer (ultra-mobile personal computer, UMPC), a mobile Internet device (mobile Internet device, MID), an augmented reality (augmented reality, AR)/virtual reality (virtual reality, VR) device, a robot, a wearable device (a wearable device) or a vehicle user equipment (vehicle user equipment, VUE), or a pedestrian user equipment (pedestrian user equipment, PUE). The wearable device includes a smart watch, a bracelet, a headset, glasses, and the like. It is to be noted that, a specific type of the terminal is not limited in the embodiments of this application.

For ease of understanding, content involved in the embodiments of this application is described below.

Currently, a plurality of types of textures in an image are usually processed in an intra-frame prediction mode. The intra-frame prediction mode includes an angle prediction mode, a direct current (direct current, DC) prediction mode, and a planar (planar) prediction mode. An index corresponding to the angle prediction mode is in a range of -14 to 80, an index corresponding to the DC prediction mode is 1, and an index corresponding to the planar prediction mode is 0.

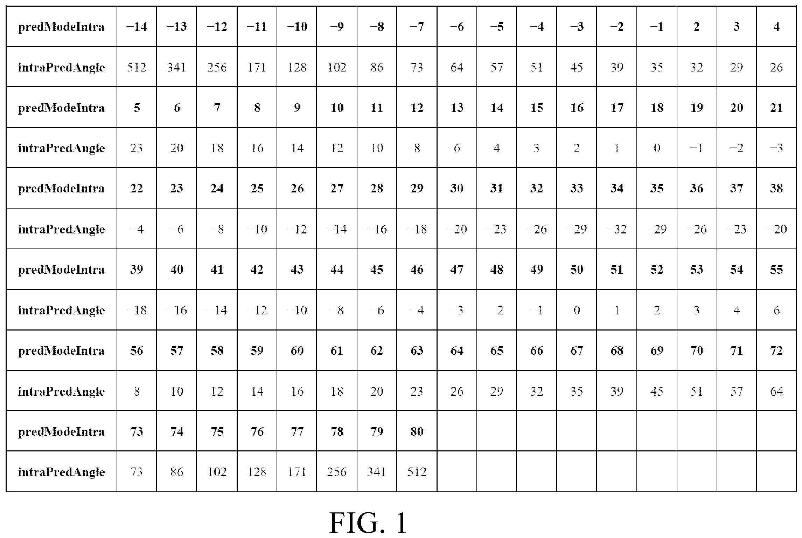

The angle prediction mode is equivalent to offsetting a prediction block in a horizontal or vertical direction. For specific mapping relationships between different angle modes and offset values, refer to FIG. 1. predModeIntra in FIG. 1 is the index corresponding to the angle prediction mode, and intraPredAngle is the offset value.

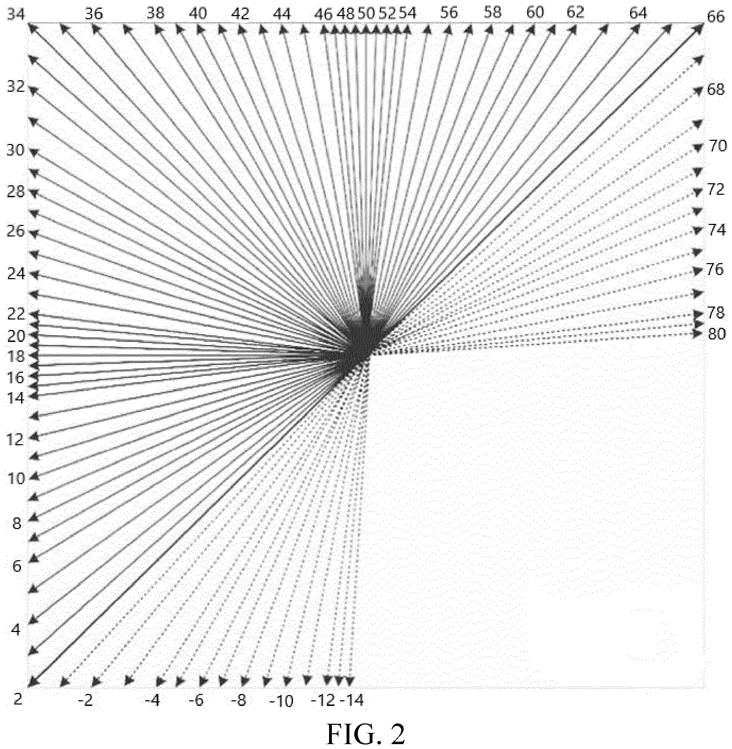

For ease of understanding, referring to FIG. 2, FIG. 2 shows an offset position corresponding to each angle prediction mode.

Further, an inverse angle value may be obtained based on the offset value, and a specific formula is as follows:

$$invAngle = Round(\frac{512 * 32}{intraPredAngle})$$

invAngle is the inverse angle value, and intraPredAngle is the offset value.

It may be understood that, a PDPC angle prediction mode is supported in a case that the index corresponding to the angle prediction mode is greater than 50 or less than 18. A PDPC is an intra-frame prediction method, which may be used to further modify a prediction sample on which intra-frame prediction is performed.

An existing PDPC method is specifically described as follows:

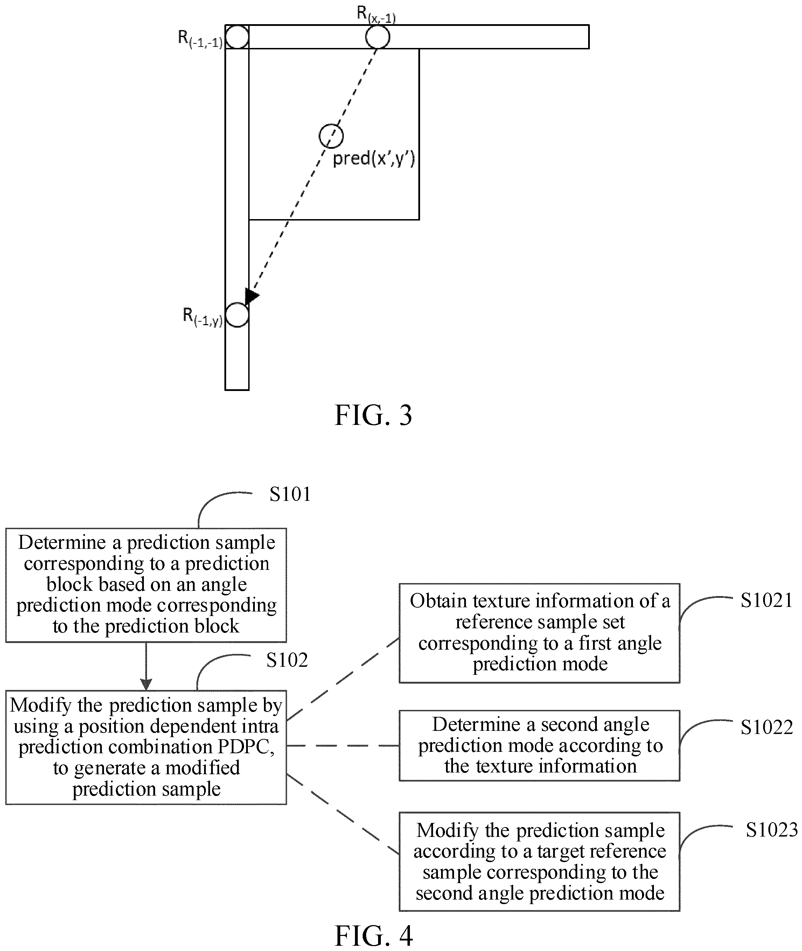

Refer to FIG. 3. As shown in FIG. 3, based on a prediction angle corresponding to the prediction block, coordinates of a prediction sample corresponding to the prediction block are (x', y'), and coordinates of a reference sample 1 are R(x, -1), that is, the reference sample 1 is located above a current prediction block. The reference sample 1 is determined by a prediction angle corresponding to the current prediction block based on the prediction sample.

In this case, an angle between the prediction sample and the reference sample 1 may be rotated by 180 degrees to obtain a reference sample 2. As shown in FIG. 3, coordinates of the reference sample 2 are R(-1, y), that is, the reference sample 2 is located on a left side of the prediction block. The reference sample 1 and the reference sample 2 include at least one reference sample.

In the existing PDPC method, how to calculate a scale factor is specifically described as follows:

1. In a case that an index corresponding to an angle prediction mode of the prediction block is greater than 50, the scale factor may be calculated by using the following pseudo code:

$$nScale = Min(2, Log2(nTbH) - Floor(Log2(3 * invAngle - 2)) + 8)$$

nScale is the scale factor, nTbH is a height of the prediction block, and invAngle is an inverse angle value corresponding to the prediction block.

2. In a case that the index corresponding to the angle prediction mode of the prediction block is less than 18, and the corresponding index is not equal to 0 and 1, the scale factor may be calculated by using the following pseudo code:

$$nScale = Min(2, Log2(nTbW) - Floor(Log2(3 * invAngle - 2)) + 8)$$

nScale is the scale factor, nTbW is a width of the prediction block, and invAngle is the inverse angle value corresponding to the prediction block.

3. Otherwise, in a case that the index corresponding to the angle prediction mode of the prediction block is equal to 18, 50, 0, or 1, the scale factor may be calculated by using the following pseudo code:

$$nScale=(Log2)nTbW)+Log2(nTbH)-2) >> 2$$

nScale is the scale factor, nTbW is the width of the prediction block, and nTbH is the height of the prediction block.

In the existing PDPC method, how to calculate a variable is specifically described as follows:
It may be understood that, the variable includes refL[x][y], refT[x][y], wT[y], and wL[x], where refL[x][y] represents a reference sample on a left side of the prediction block, and in a scenario shown in FIG. 3, the variable represents the reference sample 2; refT[x][y] represents a reference sample above the prediction block, and in the scenario shown in FIG. 3, the variable represents the reference sample 1; wT[y] represents a weight value of the reference sample on the left side of the prediction block; and wL[x] represents a weight value of the reference sample above the prediction block.
Reference sample arrays mainRef[x] and sideRef[y] are first determined as follows.:

$$mainRef[x]=p[x][-1]$$

$$sideRef[y]=p[-1][y]$$

mainRef[x] represents coordinates of the prediction sample mapped to the reference sample above the prediction block, and in the shown scenario, mainRef[x] is associated with the reference sample 1. sideRef[y] represents coordinates of the prediction sample mapped to the reference sample on the left side of the prediction block, and in the scenario shown in FIG. 3, sideRef[y] is associated with the reference sample 2. In other words, p[x] is a horizontal coordinate of the prediction sample, and p[y] is a vertical coordinate of the prediction sample.

1. In a case that the index corresponding to the angle prediction mode of the prediction block is equal to 0 or 1, that is, an intra-frame prediction mode corresponding to the prediction block is the DC mode or the planar mode, the variable may be calculated by using the following pseudo code:

$$refL[x][y]=p[-1][y]$$

$$refT[x][y]=p[x][-1]$$

$$wT[y]=32>>((y<1)>>nScale)$$

$$wL[x]=32>>((x<1)>>nScale)$$

p[-1][y] are coordinates of the prediction sample mapped to the reference sample on the left side of the prediction block, p[x][-1 ] are coordinates of the prediction sample mapped to the reference sample above the prediction block, and nScale is the scale factor.
2. In a case that the index corresponding to the angle prediction mode of the prediction block is equal to 18 or 50, the variable may be calculated by using the following pseudo code:

$$refL[x][y]=p[-1][y]-p[-1][-1] + predSamples[x][y]$$

$$refT[x][y]=p[x][-1]-p[-1][-1] + predSamples[x][y]$$

$$wT[y]=(predModeIntra== INTRA\_ANGULAR18)? 32>((y<1)>>nScale):0$$

$$wL[x]=(predModeIntra== INTRA\_ANGULAR50)? 32>((x<1)>>nScale):0$$

predSamples [x][y] are coordinates of the prediction sample, predModeIntra is the angle prediction mode of the prediction block, INTRA_ANGULAR18 indicates that the index corresponding to the angle prediction mode of the prediction block is 18, nScale is the scale factor, and INTRA_ANGULAR50 indicates that the index corresponding to the angle prediction mode of the prediction block is 50.

3. In a case that the index corresponding to the angle prediction mode of the prediction block is less than 18, and the scale factor is greater than or equal to 0, the variable may be calculated by using the following pseudo code:

$$dXInt[y]=((y+1)*invAngle+ 256)>> 9$$

$$dX[x][y]=x+dXInt[y]$$

The variable dXInt[y] represents an offset value of a coordinate X of the reference sample above the prediction block relative to a coordinate X of the prediction sample, the variable dX[x][y] is used for determining a position of the reference sample above the prediction block, and invAngle is the inverse angle value corresponding to the prediction block.

$$refL[x][y]=0$$

$$refT[x][y]=(y<(3<<nScale))? mainRef[dX[x][y]]:0$$

$$wT[y]=32>>((y<1)>>nScale)$$

$$wL[x]=0$$

4. In a case that the index corresponding to the angle prediction mode of the prediction block is greater than 50, and the scale factor is greater than or equal to 0, the variable may be calculated by using the following pseudo code:

$$dYInt [x]=((x+1)* invAngle + 256)>> 9$$

$$dY[x][y]=y+dYInt[x]$$

The variable dYInt [x] represents an offset value of a coordinate Y of the reference sample on the left side of the prediction block relative to a coordinate Y of the prediction sample, the variable dY[x][y] is used for determining a position of the reference sample on the left side of the prediction block, and invAngle is the inverse angle value corresponding to the prediction block.

$$refL[x][y]=(x<(3<<nScale))? sideRef[dY[x][y]]:0$$

$$refT[x][y]=0$$

$$wT[y]=0$$

$$wL[x]=32>>((x<1)>>nScale)$$

5. In a case that the index corresponding to the angle prediction mode of the prediction block is greater than 18 and less than 50, refL[x][y], refT[x][y], wT[y], and wL[x] are set to 0.

In the existing PDPC method, how to modify the prediction sample by using the variable to obtain a modified prediction sample is specifically described as follows:

$$predSamples[x'][y']=Clip1(refL[x][y]*wL[x]+refT[x][y]*wT[y]+((64-wL[x]-w T[y])*predSamples[x][y]+32)>>6)$$

predSamples[x'][y'] is the modified prediction sample, and predSamples[x][y] is an unmodified prediction sample.

In the existing PDPC method, as shown in FIG. 3, after the reference sample 1 is determined based on a first prediction angle corresponding to the angle prediction mode of the prediction block, an angle between the prediction sample and the reference sample 1 is rotated by 180 degrees to obtain the reference sample 2. However, texture information that is in the reference samples and that corresponds to each reference sample is not fully considered in the process of determining the reference sample 2. There may be no linear relationship between a second prediction angle corresponding to the reference sample 2 and a first prediction angle corresponding to the reference sample 1. As a result, the modified prediction sample obtained by using the PDPC method is not accurate, and accuracy of intra-frame prediction is reduced.

Refer to FIG. 4. FIG. 4 is a flowchart of an intra-frame prediction method according to this application. The intra-frame prediction method provided in the embodiments of this application includes the following steps:

S101: Determine a prediction sample corresponding to a prediction block based on an angle prediction mode corresponding to the prediction block.

As described above, a first reference sample and a second reference sample may be determined based on the angle prediction mode corresponding to the prediction block, where the first reference sample may be understood as the reference sample 1 in the scenario shown in FIG. 3, and the second reference sample may be understood as the reference sample 2 in the scenario shown in FIG. 3. In this way, the prediction sample is further obtained based on the reference sample 1 and the reference sample 2, where the prediction sample may be understood as the prediction sample in the scenario shown in FIG. 3.

S 102: Modify the prediction sample by using a position dependent intra prediction combination PDPC, to generate a modified prediction sample.

In this step, in a case that an index corresponding to the angle prediction mode of the prediction block is less than 18 or greater than 50, the prediction sample may be modified by using the PDPC, and a modified prediction sample is generated, to improve accuracy of the modified prediction sample.

The modifying the prediction sample by using a position dependent intra prediction combination includes:

S1021: Obtain texture information of a reference sample set corresponding to a first angle prediction mode.

In this step, the first angle prediction mode is an angle prediction mode corresponding to the prediction block, the reference sample set is determined based on a first prediction angle corresponding to the first angle prediction mode, and the reference sample set includes at least one reference sample. The texture information may be understood as a gradient histogram generated by using a decoder-side intra mode derivation (decoder-side intra mode derivation, DIMD) mode, or an angle prediction mode corresponding to a decoded block adjacent to the prediction block. For a specific technical solution for how to obtaining the texture information, refer to the following embodiments.

S1022: Determine a second angle prediction mode according to the texture information.

In this step, after the texture information is obtained, in an optional implementation, the second angle prediction mode may be derived by comparing amplitudes in the gradient histogram; and in another optional implementation, the second angle prediction mode may be derived based on the angle prediction mode corresponding to the decoded block.

S1023: Modify the prediction sample according to a target reference sample corresponding to the second angle prediction mode.

It may be understood that, in a case that the index corresponding to the angle prediction mode of the prediction block is greater than 50, the first reference sample corresponding to the prediction block is above the prediction block, and the second reference sample corresponding to the prediction block is located on a left side of the prediction block. In a case that the index corresponding to the angle prediction mode of the prediction block is less than 18, the first reference sample corresponding to the prediction block is above the prediction block, and the second reference sample corresponding to the prediction block is located on the left side of the prediction block. The second reference sample may be understood as the target reference sample.

In this step, after the second angle prediction mode is obtained, the prediction sample may be modified by using the target reference sample corresponding to the second angle prediction mode. For a specific implementation, refer to the following embodiment.

In the embodiments of this application, the texture information of the reference sample set corresponding to the first angle prediction mode is obtained, the second angle prediction mode is determined according to the texture information, and a prediction angle corresponding to the second angle prediction mode is determined as the second prediction angle instead of obtaining the second prediction angle by adding or subtracting 180 degrees based on the first prediction angle corresponding to the first angle prediction mode. Further, the prediction sample is modified according to the target reference sample corresponding to the second angle prediction mode, so that the prediction sample is modified by using the second angle prediction mode determined based on the texture information, which improves accuracy of a modified prediction sample.

Optionally, the obtaining texture information of a reference sample set corresponding to a first angle prediction mode includes:

in a case that an index corresponding to the first angle prediction mode is less than a first preset index, performing texture analysis on at least some pixels in a reconstructed image that is above the prediction block and adjacent to the prediction block, to obtain the texture information; or

in a case that the index corresponding to the first angle prediction mode is greater than a second preset index, performing texture analysis on at least some pixels in a reconstructed image that is on a left side of the prediction block and adjacent to the prediction block, to obtain the texture information.

A manner of obtaining the texture information is to perform texture analysis on the reconstructed image adjacent to the prediction block.

In this embodiment, optionally, the first preset index is 18, and the second preset index is 50. In a case that the index corresponding to the first angle prediction mode is less than the first preset index, it is determined that the reference sample set is above the prediction block, and texture analysis is performed on at least one row of pixels in the reconstructed image that is above the prediction block and adjacent to the prediction block, to obtain the texture information.

In a case that the index corresponding to the first angle prediction mode is greater than the second preset index, it is determined that the reference sample set is located on a left side of a current prediction block, and texture analysis is performed on at least one column of pixels in the reconstructed image that is on the left side of the current prediction block and adjacent to the current prediction block, to obtain the texture information.

It may be understood that, texture analysis may be performed on the reference sample set by using the DIMD, to obtain the texture information. Further, the second angle prediction mode is derived from the texture information.

The DIMD mode is an implicit intra mode derivation technology. In a case that the index corresponding to the first angle prediction mode is less than the first preset index, gradient histogram calculation is performed on at least one row of pixels above the prediction block through a Sobel (Sobel) filter, a direction of a gradient is converted into an angle prediction mode, intensity of the gradient is accumulated as an amplitude of the angle prediction mode, to generate a gradient histogram, and the gradient histogram is determined as the texture information of the reference sample set.

In a case that the index corresponding to the first angle prediction mode is greater than the second preset index, gradient histogram calculation is performed on at least one column of pixels in the reconstructed image that is on the left side of the prediction block and adjacent to the current prediction block through the Sobel filter, to further generate a gradient histogram, and the gradient histogram is determined as the texture information of the reference sample set.

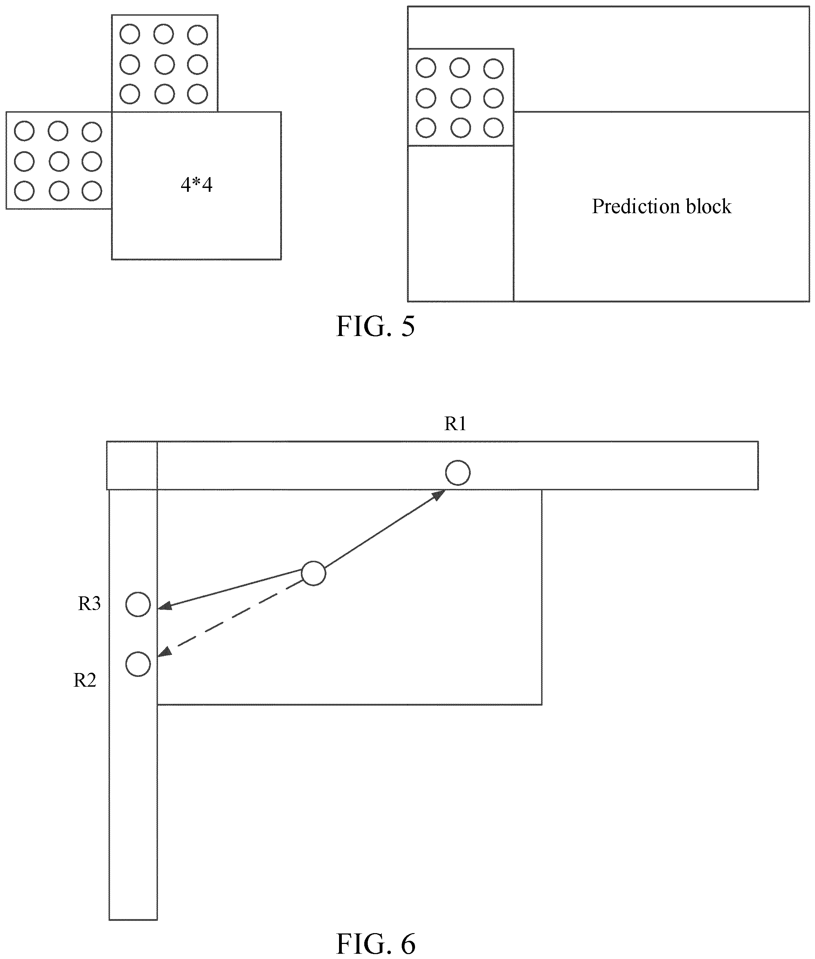

For ease of understanding, refer to FIG. 5. As shown in FIG. 5, in the DIMD mode, a window may be used to perform texture analysis on the reference sample set. In a case that a size corresponding to the prediction block is 4*4, texture analysis may be performed on at least some pixels above the prediction block and at least some pixels below the prediction block by using 2 windows shown in FIG. 5. In a case that the size corresponding to the prediction block is not 4*4, texture analysis may be performed on at least some pixels above the prediction block and at least some pixels below the prediction block by using a sliding window shown in FIG. 5.

Optionally, the obtaining texture information of a reference sample set corresponding to a first angle prediction mode includes:

in a case that an index corresponding to the first angle prediction mode is less than a first preset index, obtaining the texture information based on an intra-frame prediction mode corresponding to a decoded block that is above the prediction block and adjacent to the prediction block; or

in a case that the index corresponding to the first angle prediction mode is greater than a second preset index, obtaining the texture information based on an intra-frame prediction mode corresponding to a decoded block that is on a left side of the prediction block and adjacent to the prediction block.

A manner of obtaining the texture information is to determine the texture information based on the angle prediction mode corresponding to the decoded block adjacent to the prediction block.

In this embodiment, optionally, the first preset index is 18, and the second preset index is 50. In a case that the index corresponding to the first angle prediction mode is less than the first preset index, it is determined that the reference sample set is above the prediction block, an intra-frame prediction mode corresponding to a decoded block above the prediction block and adjacent to the prediction block may be obtained, and a gradient histogram represented by using the intra-frame prediction mode is determined as the texture information.

In a case that the index corresponding to the first angle prediction mode is greater than the second preset index, it is determined that the reference sample set is located on the left side of the prediction block, an intra-frame prediction mode corresponding to a decoded block on the left side of the prediction block and adjacent to the prediction block may be obtained, and a gradient histogram represented by using the intra-frame prediction mode is determined as the texture information.

Optionally, the modifying the prediction sample according to a target reference sample corresponding to the second angle prediction mode includes:

determining a scale factor and a target inverse angle value according to a first prediction angle corresponding to the first angle prediction mode and a second prediction angle corresponding to the second angle prediction mode; and modifying the prediction sample by using the target reference sample, the scale factor, and the target inverse angle value.

The first prediction angle is a prediction angle corresponding to the first angle prediction mode, and the second prediction angle is a prediction angle corresponding to the second angle prediction mode. After the first prediction angle and the second prediction angle are obtained, the scale factor and the target inverse angle value may be calculated by using the first prediction angle and the second prediction angle. For a specific technical solution, refer to the following embodiments.

In this embodiment, after the scale factor and the target inverse angle value are determined, the prediction sample may be modified by using the target reference sample, the scale factor, and the target inverse angle value, to obtain a modified prediction sample, thereby improving accuracy of intra-frame prediction.

Optionally, the determining a scale factor and a target inverse angle value according to a first prediction angle corresponding to the first angle prediction mode and a second prediction angle corresponding to the second angle prediction mode includes:

determining the scale factor by using a first inverse angle value corresponding to the first prediction angle; and determining the target inverse angle value according to the first prediction angle and the second prediction angle.

In this embodiment, in an optional implementation, the scale factor is calculated by using the first inverse angle value corresponding to the first prediction angle; and the target inverse angle value is determined according to the first prediction angle and the second prediction angle. For a technical solution for how to determine the target inverse angle value, refer to the following embodiments.

As described above, in pseudo code for calculating the scale factor, a parameter invAngle needs to be used. In this embodiment, the parameter invAngle may be set to the first inverse angle value corresponding to the first prediction angle, that is, the inverse angle value corresponding to the prediction block.

Optionally, the determining a scale factor and a target inverse angle value according to a first prediction angle corresponding to the first angle prediction mode and a second prediction angle corresponding to the second angle prediction mode includes:

determining the target inverse angle value according to the first prediction angle and the second prediction angle; and determining the scale factor by using the target inverse angle value.

In this embodiment, in an optional implementation, the target inverse angle value is determined according to the first prediction angle and the second prediction angle; and the scale factor is calculated by using the target inverse angle value, that is, the target inverse angle value is substituted into the pseudo code for calculating the scale factor to obtain the scale factor. For a technical solution for how to determine the target inverse angle value, refer to the following embodiments.

As described above, in pseudo code for calculating the scale factor, a parameter invAngle needs to be used. In this embodiment, the parameter invAngle may be set to the target inverse angle value obtained according to the first prediction angle and the second prediction angle.

A technical solution for calculating the target inverse angle value is specifically described below.

Optionally, the determining the target inverse angle value according to the first prediction angle and the second prediction angle includes:

rounding a division result of a first preset value and a first offset value in a case that the first angle prediction mode and the second angle prediction mode do not meet a preset condition, to obtain the target inverse angle value; or obtaining the target inverse angle value according to a second offset value and a second preset value in a case that the first angle prediction mode and the second angle prediction mode meet the preset condition.

In this embodiment, the preset condition is preset. For detailed description of the preset condition, refer to the following embodiments.

In a case that the first angle prediction mode and the second angle prediction mode do not meet the preset condition, the target inverse angle value may be obtained by using the calculation formula of the inverse angle value. The calculation formula of the inverse angle value is as follows:

$$invAngle = Round(\frac{512*32}{intraPredAngle})$$

invAngle is the target inverse angle value. 512*32 is the first preset value, that is, the first preset value is 16384. predModeAng is the first offset value. A first offset value corresponding to the first prediction angle, that is, an offset value corresponding to the first angle prediction mode may be obtained by querying FIG. 1.

In a case that the first prediction angle and the second prediction angle meet the preset condition, a second offset value corresponding to the second prediction angle, that is, an offset value corresponding to the second angle prediction mode may be obtained by querying FIG. 1. Further, the target inverse angle value is obtained according to the second offset value and the second preset value. For a specific technical solution, refer to the following embodiments.

Optionally, the obtaining the target inverse angle value according to a second offset value and a second preset value includes:

performing a left shift operation on the second offset value and the second preset value, to obtain the target inverse angle value.

In an optional implementation, after the second offset value and the second preset value are obtained, the left shift operation is performed on the second offset value and the second preset value to obtain the target inverse angle value. To be specific, the target inverse angle value may be calculated by using the following pseudo code:

$$invAngle = predModeAng1 << k$$

invAngle is the target inverse angle value, predModeAng1 is the second offset value, and k is the second preset value. The second preset value is related to precision of the second angle prediction mode. For example, the precision of the second angle prediction mode is 32, and k is equal to 4.

Optionally, the obtaining the target inverse angle value according to a second offset value and a second preset value includes:

performing a left shift operation on the second offset value and the second preset value, to obtain a second inverse angle value; rounding the division result of the first preset value and the first offset value, to obtain a third inverse angle value; and performing weighted summation on the second inverse angle value and the third inverse angle value, to determine a sum as the target inverse angle value.

In another optional implementation, the left shift operation is performed on the second offset value and the second preset value to obtain the second inverse angle value. It may be understood that, pseudo code for calculating the second inverse angle value in this embodiment is the same as pseudo code for calculating the target inverse angle value in the foregoing embodiment, and the pseudo code may be represented as follows:

invAngle 1 =predModeAng1<<k
invAngle1 is the second inverse angle value, predModeAng1 is the second offset value, and k is the second preset value.

The first offset value corresponding to the first prediction angle is obtained by querying FIG. 1. The division result of the first preset value and the first offset value is rounded to obtain the third inverse angle value. To be specific, the third inverse angle value may be represented as follows:

$$invAngle0 = Round(\frac{512*32}{predModeAng})$$

invAngleO is the third inverse angle value, predModeAng is the first offset value, and 512*32 is the first preset value, that is, the first preset value is 16384.

After the second inverse angle value and the third inverse angle value are obtained, a product of the second inverse angle value and a preset first weight value is used as a first value, and a product of the third inverse angle value and a preset second weight value as a second value, and a sum of the first value and the second value is used as the target inverse angle value. Optionally, an average value of the second inverse angle value and the third inverse angle value is determined as the target inverse angle value.

For ease of understanding, refer to FIG. 6. As shown in FIG. 6, based on the prediction sample, a first reference sample R1 is determined by using the first prediction angle corresponding to the prediction block. As shown in FIG. 6, a reference sample R2 pointed by a dashed line in the figure is a position of the second reference sample determined in the existing PDPC method, and it can be seen that in the existing PDPC method, the prediction sample, the first reference sample, and the second reference sample are located on a same straight line.

In this embodiment, after the target inverse angle value is obtained, the position of the second reference sample may be modified based on the target inverse angle value. As shown in FIG. 6, a modified second reference sample is a reference sample R3 pointed by a solid line in the figure. Further, the prediction sample is modified based on the first reference sample and the modified second reference sample.

Optionally, the preset condition includes any one of the following:

the index corresponding to the first angle prediction mode is less than the first preset index, the index corresponding to the first angle prediction mode is different from a third preset index, an index corresponding to the second angle prediction mode is greater than the second preset index, and a target scale factor is greater than or equal to a third preset value, where
the index corresponding to the first angle prediction mode is greater than the second preset index, the index corresponding to the second angle prediction mode is less than the first preset index, the index corresponding to the second angle prediction mode is different from the third preset index, and the target scale factor is greater than or equal to the third preset value.

Optionally, the first preset index is 18, the second preset index is 50, and the third preset index is 0 and 1.

After the index corresponding to the first angle prediction mode and the index corresponding to the second angle prediction mode are obtained, it may be determined that the first angle prediction mode and the second angle prediction mode meet the preset condition if any one of the following cases is met:
In a case, the index corresponding to the first angle prediction mode is less than 18, and the index corresponding to the first angle prediction mode is not equal to 0 or 1; the index corresponding to the second angle prediction mode is greater than 50; and the target scale factor is greater than or equal to the third preset value. Optionally, the third preset value is equal to 0.

In a case that the target inverse angle value is calculated after the scale factor is calculated, the target scale factor is a scale factor calculated by using the first inverse angle value, that is, an inverse angle value corresponding to the first angle prediction mode. In a case that the scale factor is calculated after the target inverse angle value is calculated, the target scale factor is a scale factor calculated by using the target inverse angle value.

In the other case, the index corresponding to the first angle prediction mode is greater than 50; the index corresponding to the second angle prediction mode is less than 18, and the index corresponding to the second angle prediction mode is not equal to 0 or 1; and the target scale factor is greater than or equal to the third preset value.

Optionally, the preset condition includes any one of the following:

the index corresponding to the first angle prediction mode is less than the first preset index, the index corresponding to the first angle prediction mode is different from a third preset index, and a target scale factor is greater than or equal to a third preset value; and
the index corresponding to the first angle prediction mode is greater than a second preset index, and the target scale factor is greater than or equal to the third preset value.

It may be determined that the first angle prediction mode and the second angle prediction mode meet the preset condition if any one of the following cases is met.
As described above, the first preset index is 18, the second preset index is 50, and the third preset index is 0 and 1.
In a case, the index corresponding to the first angle prediction mode is less than 18, and the index corresponding to the first angle prediction mode is not equal to 0 or 1; and the target scale factor is greater than or equal to 0.
In the other case, the index corresponding to the first angle prediction mode is greater than 50, and the target scale factor is greater than or equal to 0.
Optionally, the modifying the prediction sample by using the target reference sample, the scale factor, and the target inverse angle value includes:

obtaining a target variable by using the target reference sample, the scale factor, and the target inverse angle value; and
modifying the prediction sample by using the target variable.

In this embodiment, coordinates of the target reference sample, the scale factor, and the target inverse angle value may be substituted into the related pseudo code for calculating the target variable refL[x][y], refT[x][y], wT[y], and wL[x], to obtain a target variable.
Further, the target variable and the coordinates of the prediction sample are substituted into the related pseudo code for modifying the prediction sample, to obtain a modified prediction sample.
Optionally, the modifying the prediction sample by using the target variable includes:

performing linear interpolation filtering on the target reference sample, to adjust the target variable; and
modifying the prediction sample by using an adjusted target variable.

In this embodiment, a 2-tap linear interpolation filter may further be introduced to perform linear interpolation filtering on the target reference sample, to adjust a value of the target variable.
Reference sample arrays are first determined as mainRef[x] and sideRef[y].

$$\text{mainRef[x]=p[x][}-1]$$

$$\text{sideRef[y]=p[}-1][y]$$

mainRef[x] represents coordinates of the prediction sample mapped to the reference sample above the prediction block, and sideRef[y] represent coordinates of the prediction sample mapped to the reference sample on the left side of the prediction block.
To be specific, in a case that the index corresponding to the first angle prediction mode is less than 18, and the scale factor is greater than or equal to 0, the target variable may be calculated by using the following pseudo code:

$$\text{dXPos[y]} = ((y + 1) * \text{invAngle} + 4 ) \gg 3$$

$$\text{dXFrac[y]} = \text{dXPos[y]} \mathbin{\&} 63$$

$$\text{dXInt[y]} = \text{dXPos [y]} \gg 6$$

$$dX[x][y] = x + dXInt[y]$$

The variable dXPos[y] is a position that is of the reference sample above the prediction block in the reconstructed image located above and that is represented with position precision of 1/64. The variable dXFrac[y] is a fractional part of the position that is of the reference sample above the prediction block in the reconstructed image located above and that is represented with the position precision of 1/64. invAngle is the inverse angle value corresponding to the prediction block. dXInt[y] represents an offset value of a coordinate X of the reference sample above the prediction block relative to a coordinate X of the prediction sample, and the variable dX[x][y] is used for determining a position of the reference sample above the prediction block.

$$refL[x][y] = 0$$

$$refT[x][y] = (y < (3 << nScale))? ((64 - dXFrac[y]) * mainRef[dX[x][y]] + dXFrac[y] * mainRef[dX[x][y] + 1] + 32) >> 6) : 0$$

$$wT[y] = 32 >> ((y << 1) >> nScale)$$

$$wL[x] = 0$$

nScale is the scale factor.
To be specific, in a case that the index corresponding to the first angle prediction mode is greater than 50, and the scale factor is greater than or equal to 0, the target variable may be calculated by using the following pseudo code:

$$dYPos[x] = ((x + 1) * invAngle + 4) >> 3$$

$$dYFrac[x] = dYPos[x] \& 63$$

$$dYInt[x] = dYPos[x] >> 6$$

$$dY[x][y] = y + dYInt[x]$$

The variable dYPos[x] is a position that is of the reference sample on the left side of the prediction block in the reconstructed image located on the left side and that is represented with the position precision of 1/64. The variable dYFrac[x] is a fractional part of the position that is of the reference sample on the left side of the prediction block in the reconstructed image located on the left side and that is represented with the position precision of 1/64. The variable dYInt [x] represents an offset value of a coordinate Y of the reference sample on the left side of the prediction block relative to a coordinate Y of the prediction sample, the variable dY[x] [y] is used for determining a position of the reference sample on the left side of the prediction block, and invAngle is the inverse angle value corresponding to the prediction block.

$$refL[x][y] = (x < (3 << nScale))? (( 64 - dYFrac[x] ) * sideRef[dY[x][y]] + dYFrac[x] * sideRef[dY[x][y] + 1] + 32) >> 6) : 0$$

$$refT[x][y] = 0$$

$$wT[y]=0$$

$$wL[x]=32>>((x<1)>>nScale)$$

nScale is the scale factor.

After an adjusted target variable is obtained, the adjusted target variable and the coordinates of the prediction sample are inputted into the related pseudo code for modifying the prediction sample, to obtain a modified prediction sample.

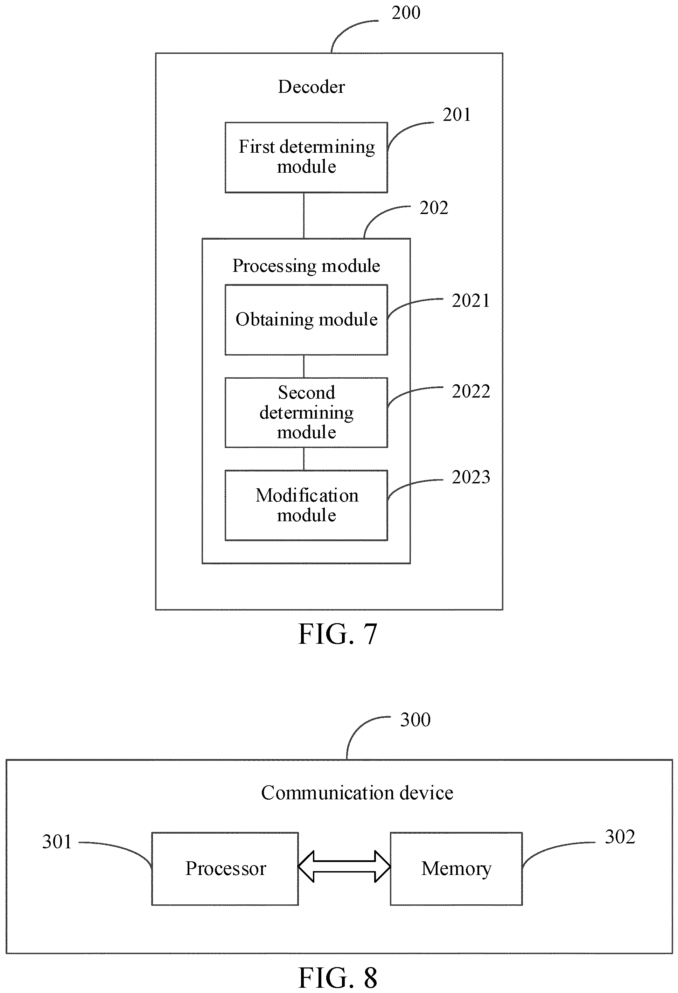

As shown in FIG. 7, a decoder 200 includes:

a first determining module 201, configured to determine a prediction sample corresponding to a prediction block based on an angle prediction mode corresponding to the prediction block; and
a processing module 202, configured to modify the prediction sample by using a position dependent intra prediction combination PDPC, to generate a modified prediction sample, where
the processing module 202 includes:

an obtaining module 2021, configured to obtain texture information of a reference sample set corresponding to a first angle prediction mode;
a second determining module 2022, configured to determine a second angle prediction mode according to the texture information; and
a modification module 2023, configured to modify the prediction sample according to a target reference sample corresponding to the second angle prediction mode.

Optionally, the obtaining module 2021 is specifically configured to:

in a case that an index corresponding to the first angle prediction mode is less than a first preset index, perform texture analysis on at least some pixels in a reconstructed image that is above the prediction block and adjacent to the prediction block, to obtain the texture information; or
in a case that the index corresponding to the first angle prediction mode is greater than a second preset index, perform texture analysis on at least some pixels in a reconstructed image that is on a left side of the prediction block and adjacent to the prediction block, to obtain the texture information.

Optionally, the obtaining module 2021 is further configured to:

in a case that an index corresponding to the first angle prediction mode is less than a first preset index, obtain the texture information based on an intra-frame prediction mode corresponding to a decoded block that is above the prediction block and adjacent to the prediction block; or
in a case that the index corresponding to the first angle prediction mode is greater than a second preset index, obtain the texture information based on an intra-frame prediction mode corresponding to a decoded block that is on a left side of the prediction block and adjacent to the prediction block.

Optionally, the modification module 2023 is specifically configured to:

determine a scale factor and a target inverse angle value according to a first prediction angle corresponding to the first angle prediction mode and a second prediction angle corresponding to the second angle prediction mode; and
modify the prediction sample by using the target reference sample, the scale factor, and the target inverse angle value.

Optionally, the modification module 2023 is further configured to:

determine the scale factor by using a first inverse angle value corresponding to the first prediction angle; and
determine the target inverse angle value according to the first angle prediction mode and the second angle prediction mode.

Optionally, the modification module 2023 is further configured to:

determine the target inverse angle value according to the first angle prediction mode and the second angle prediction mode; and
determine the scale factor by using the target inverse angle value.

Optionally, the modification module 2023 is further configured to:

round a division result of a first preset value and a first offset value in a case that the first angle prediction mode and the second angle prediction mode do not meet a preset condition, to obtain the target inverse angle value; or obtain the target inverse angle value according to a second offset value and a second preset value in a case that the first angle prediction mode and the second angle prediction mode meet the preset condition.

Optionally, the modification module 2023 is further configured to:
perform a left shift operation on the second offset value and the second preset value, to obtain the target inverse angle value.

Optionally, the modification module 2023 is further configured to:

perform a left shift operation on the second offset value and the second preset value, to obtain a second inverse angle value;
round the division result of the first preset value and the first offset value, to obtain a third inverse angle value; and perform weighted summation on the second inverse angle value and the third inverse angle value, to determine a sum as the target inverse angle value.

Optionally, the modification module 2023 is further configured to:

obtain a target variable by using the target reference sample, the scale factor, and the target inverse angle value; and modify the prediction sample by using the target variable.

Optionally, the modification module 2023 is further configured to:

perform linear interpolation filtering on the target reference sample, to adjust the target variable; and modify the prediction sample by using an adjusted target variable.

The decoder provided in the embodiments of this application can implement the processes implemented in the method embodiment of FIG. 4 and achieve the same technical effect. To avoid repetition, details are not described herein again.

It is to be noted that, an execution entity of the intra-frame prediction method provided in the embodiments of this application may be a decoder, or may be a control module in the decoder for performing the intra-frame prediction method. The decoder provided in the embodiments of this application is described in the embodiments of this application by using an example in which the decoder performs the intra-frame prediction method.

In the embodiments of this application, the texture information of the reference sample set corresponding to the first angle prediction mode is obtained, the second angle prediction mode is determined according to the texture information, and a prediction angle corresponding to the second angle prediction mode is determined as the second prediction angle instead of obtaining the second prediction angle by adding or subtracting 180 degrees based on the first prediction angle corresponding to the first angle prediction mode. Further, the prediction sample is modified according to the target reference sample corresponding to the second angle prediction mode, so that the prediction sample is modified by using the second angle prediction mode determined based on the texture information, which improves accuracy of a modified prediction sample.

The decoder in the embodiments of this application may be an apparatus, an apparatus or electronic device with an operating system, or may be a component, an integrated circuit, or a chip in the terminal. The apparatus or the electronic device may be a mobile terminal or may be a non-mobile terminal. For example, the mobile terminal may include but is not limited to a type of the terminal 11 listed above, and the non-mobile terminal may be a server, a network attached storage (network attached storage, NAS), a personal computer (personal computer, PC), a television (television, TV), a teller machine, a self-service machine, or the like. This is not specifically limited in the embodiments of this application.

The decoder provided in the embodiments of this application can implement the processes implemented in the method embodiment of FIG. 4 and achieve the same technical effect. To avoid repetition, details are not described herein again.

As shown in FIG. 8, an embodiment of this application further provides a communication device 300, including a processor 301, a memory 302, and a program or instructions stored in the memory 302 and executable on the processor 301. For example, in a case that the communication device 300 is a terminal, the program or instructions is executed by the processor 301 to implement the processes of the embodiments of the intra-frame prediction method, and the same technical effects can be achieved.

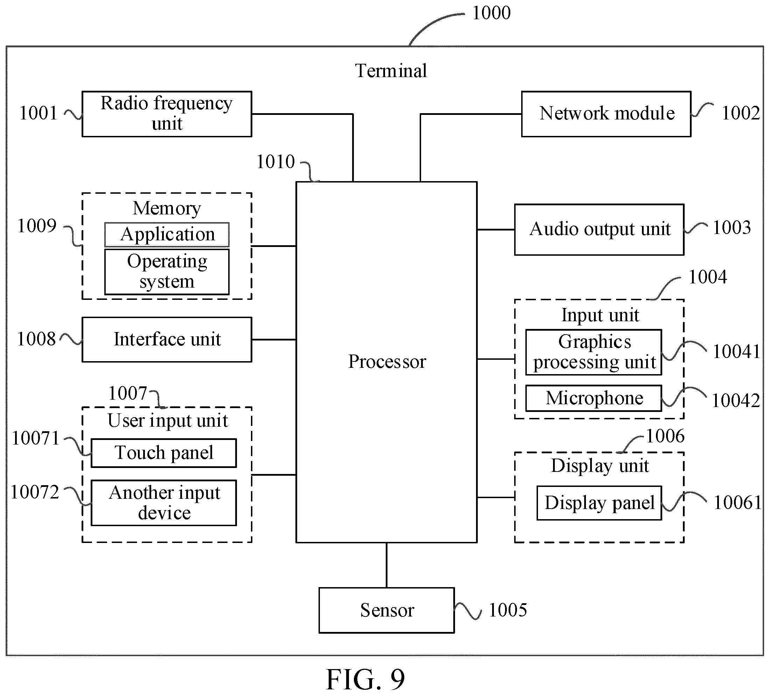

The embodiment of the terminal corresponds to the embodiment of the method of the terminal side. All implementation processes of the method embodiment are applicable to the embodiment of the terminal and can achieve the same technical effects. Specifically, FIG. 9 is a schematic diagram of a hardware structure of a terminal according to an embodiment of this application.

The terminal 1000 includes, but is not limited to, components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that, the terminal 1000 may further include a power supply (such as a battery) for supplying power to the components. Preferably, the power supply may be logically connected to the processor 1010 by using a power management system, thereby implementing functions such as charging, discharging, and power consumption management by using the power management system. A terminal structure shown in FIG. 9 does not constitute a limitation to the terminal, and the terminal may include more or fewer components than those shown in the figure, or some components may be combined, or a different component deployment may be used. Details are not described herein again.

It may be understood that, in the embodiments of this application, the input unit 1004 may include a graphics processing unit (graphics processing unit, GPU) 10041 and a microphone 10042. The graphics processing unit 10041 processes image data of a static picture or a video obtained by an image capturing apparatus (for example, a camera) in a video capturing mode or an image capturing mode. The display unit 1006 may include a display panel 10061. A display panel 10071 may be configured in a form such as a liquid crystal display or an organic light-emitting diode. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include, but is not limited to, a physical keyboard, a functional key (such as a volume control key or a switch key), a track ball, a mouse, and a joystick, and the details will not be described herein again.

In this embodiment of this application, the radio frequency unit 1001 receives downlink data from a network side device and sends the data to the processor 1010 for processing; and sends uplink data to the network side device. Generally, the radio frequency unit 1001 includes, but is not limited to, an antenna, at least one amplifier, a transceiver, a coupler, a low noise amplifier, a duplexer, and the like.

The memory 1009 may be configured to store a software program or instructions and various data. The memory 1009 may mainly include a program storage or instruction area and a data storage area. The program storage or instruction area may store an operating system, an application program or instructions required by at least one function (for example, a sound playback function and an image playback function), or the like. In addition, the memory 1009 may include a high speed random access memory, and may further include a non-volatile memory. The non-volatile memory may be a read-only memory (read-only memory, ROM), a programmable ROM (programmable ROM, PROM), an erasable PROM (erasable PROM, EPROM), an electrically EPROM (electrically EPROM, EEPROM), or a flash memory. For example, at least one magnetic disk storage device, a flash memory device, or another non-volatile solid-state storage device.

The processor 1010 may include one or more processing units. Optionally, the processor 1010 may integrate an application processor and a modem processor. The application processor mainly processes an operating system, a user interface, an application program or instructions, and the like. The modem processor mainly processes wireless communication, for example, a baseband processor. It may be understood that the foregoing modem may either not be integrated into the processor 1010.

The processor 1010 is a processor in the terminal in the foregoing embodiments. The readable storage medium includes a computer-readable storage medium, for example, a read-only memory (Read-Only Memory, ROM), a random access memory (Random Access Memory, RAM), a magnetic disk, an optical disk, or the like.

An embodiment of this application further provides a readable storage medium. The readable storage medium may be non-volatile or volatile. The readable storage medium stores a program or instructions, the program or instructions, when executed by a processor, implementing the processes of the embodiments of the intra-frame prediction method.

An embodiment of this application further provides a computer program product, where the computer program product is stored in a non-transitory storage medium, and the computer program product is configured to be executed by at least one processor to implement the processes of the embodiments of the intra-frame prediction method, and can achieve the same technical effects. To avoid repetition, details are not described herein again.

An embodiment of this application further provides a chip, including a processor and a communication interface coupled to each other, the processor being configured to run a program or instructions to implement the processes of the embodiments of the intra-frame prediction method, and can achieve the same technical effects. To avoid repetition, details are not described herein again.

It should be understood that, the chip mentioned in this embodiment of this application may also be referred to as a system-level chip, a system chip, a chip system, a system on chip, or the like.

It is to be noted that, the term such as "include", "comprise", or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Unless otherwise specified, elements defined by the sentence "including one" does not exclude that there are still other same elements in the processes, methods, objects, or apparatuses. In addition, it is to be noted that, the scope of the method and the apparatus in the embodiments of this application is not limited to executing functions in an order shown or discussed, and may also include executing the functions in a substantially simultaneous manner or in a reverse order according to involved functions. For example, the described method may be performed in an order different from that described order, and various steps may also be added, omitted, or combined. In addition, features described with reference to some examples may also be combined in other examples.

According to the descriptions of the foregoing embodiments, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions of this application essentially or the part contributing to the related art may be implemented in the form of a computer software product. The computer software product is stored in a storage medium (such as a read-only memory (ROM)/random access memory (RAM), a magnetic disk, or an optical disc), and includes several instructions for instructing a terminal (which may be a mobile phone, a computer, a server, an air conditioner, a network device, or the like) to perform the method described in the embodiments of this application.

The embodiments of this application are described above with reference to the accompanying drawings. However, this application is not limited to the foregoing specific implementations. The foregoing specific implementations are merely illustrative rather than limitative. A person of ordinary skill in the art may derive various forms from this application without departing from the spirit of this application and the scope claimed by the claims, which are all under the protection of this application.

**Claims**

1. An intra-frame prediction method, comprising:

   determining a prediction sample corresponding to a prediction block based on an angle prediction mode corresponding to the prediction block; and
   modifying the prediction sample by using a position dependent intra prediction combination PDPC, to generate a modified prediction sample, wherein
   the modifying the prediction sample by using a position dependent intra prediction combination comprises:

   obtaining texture information of a reference sample set corresponding to a first angle prediction mode, the first angle prediction mode being an angle prediction mode corresponding to the prediction block, and the reference sample set comprising at least one reference sample;
   determining a second angle prediction mode according to the texture information; and
   modifying the prediction sample according to a target reference sample corresponding to the second angle prediction mode.

2. The method according to claim 1, wherein the obtaining texture information of a reference sample set corresponding to a first angle prediction mode comprises:

   in a case that an index corresponding to the first angle prediction mode is less than a first preset index, performing texture analysis on at least some pixels in a reconstructed image that is above the prediction block and adjacent to the prediction block, to obtain the texture information; or
   in a case that the index corresponding to the first angle prediction mode is greater than a second preset index, performing texture analysis on at least some pixels in a reconstructed image that is on a left side of the prediction block and adjacent to the prediction block, to obtain the texture information.

3. The method according to claim 1, wherein the obtaining texture information of a reference sample set corresponding to a first angle prediction mode comprises:

in a case that an index corresponding to the first angle prediction mode is less than a first preset index, obtaining the texture information based on an intra-frame prediction mode corresponding to a decoded block that is above the prediction block and adjacent to the prediction block; or

in a case that the index corresponding to the first angle prediction mode is greater than a second preset index, obtaining the texture information based on an intra-frame prediction mode corresponding to a decoded block that is on a left side of the prediction block and adjacent to the prediction block.

4. The method according to any one of claims 1 to 3, wherein the modifying the prediction sample according to a target reference sample corresponding to the second angle prediction mode comprises:

determining a scale factor and a target inverse angle value according to a first prediction angle corresponding to the first angle prediction mode and a second prediction angle corresponding to the second angle prediction mode; and

modifying the prediction sample by using the target reference sample, the scale factor, and the target inverse angle value.

5. The method according to claim 4, wherein the determining a scale factor and a target inverse angle value according to a first prediction angle corresponding to the first angle prediction mode and a second prediction angle corresponding to the second angle prediction mode comprises:

determining the scale factor by using a first inverse angle value corresponding to the first prediction angle; and determining the target inverse angle value according to the first angle prediction mode and the second angle prediction mode.

6. The method according to claim 4, wherein the determining a scale factor and a target inverse angle value according to a first prediction angle corresponding to the first angle prediction mode and a second prediction angle corresponding to the second angle prediction mode comprises:

determining the target inverse angle value according to the first prediction angle and the second prediction angle; and

determining the scale factor by using the target inverse angle value.

7. The method according to claim 5 or 6, wherein the determining the target inverse angle value according to the first prediction angle and the second prediction angle comprises:

rounding a division result of a first preset value and a first offset value in a case that the first angle prediction mode and the second angle prediction mode do not meet a preset condition, to obtain the target inverse angle value, wherein the first offset value corresponds to the first angle prediction mode; or

obtaining the target inverse angle value according to a second offset value and a second preset value in a case that the first angle prediction mode and the second angle prediction mode meet the preset condition, wherein the second offset value corresponds to the second angle prediction mode.

8. The method according to claim 7, wherein the obtaining the target inverse angle value according to a second offset value and a second preset value comprises:
performing a left shift operation on the second offset value and the second preset value, to obtain the target inverse angle value.

9. The method according to claim 7, wherein the obtaining the target inverse angle value according to a second offset value and a second preset value comprises:

performing a left shift operation on the second offset value and the second preset value, to obtain a second inverse angle value;

rounding the division result of the first preset value and the first offset value, to obtain a third inverse angle value; and

performing weighted summation on the second inverse angle value and the third inverse angle value, to determine a sum as the target inverse angle value.

10. The method according to claim 7, wherein the preset condition comprises any one of the following:

the index corresponding to the first angle prediction mode is less than the first preset index, the index corresponding to the first angle prediction mode is different from a third preset index, an index corresponding to the second angle prediction mode is greater than the second preset index, and a target scale factor is greater than or equal to a third preset value, wherein the third preset index is less than the first preset index, and the target scale factor is a scale factor calculated by using the first inverse angle value or a scale factor calculated by using the target inverse angle value; and

the index corresponding to the first angle prediction mode is greater than the second preset index, the index corresponding to the second angle prediction mode is less than the first preset index, the index corresponding to the second angle prediction mode is different from the third preset index, and the target scale factor is greater than or equal to the third preset value.

11. The method according to claim 7, wherein the preset condition comprises any one of the following:

the index corresponding to the first angle prediction mode is less than the first preset index, the index corresponding to the first angle prediction mode is different from a third preset index, and a target scale factor is greater than or equal to a third preset value; and

the index corresponding to the first angle prediction mode is greater than the second preset index, and the target scale factor is greater than or equal to the third preset value.

12. The method according to claim 4, wherein the modifying the prediction sample by using the target reference sample, the scale factor, and the target inverse angle value comprises:

obtaining a target variable by using the target reference sample, the scale factor, and the target inverse angle value; and

modifying the prediction sample by using the target variable.

13. The method according to claim 12, wherein the modifying the prediction sample by using the target variable comprises:

performing linear interpolation filtering on the target reference sample, to adjust the target variable; and

modifying the prediction sample by using an adjusted target variable.

14. A decoder, comprising:

a first determining module, configured to determine a prediction sample corresponding to a prediction block based on an angle prediction mode corresponding to the prediction block; and

a processing module, configured to modify the prediction sample by using a position dependent intra prediction combination PDPC, to generate a modified prediction sample, wherein

the processing module comprises:

an obtaining module, configured to obtain texture information of a reference sample set corresponding to a first angle prediction mode, the first angle prediction mode being an angle prediction mode represented by the angle prediction mode corresponding to the prediction block, and the reference sample set comprising at least one reference sample;

a second determining module, configured to determine a second angle prediction mode according to the texture information; and

a modification module, configured to modify the prediction sample according to a target reference sample corresponding to the second angle prediction mode.

15. A terminal, comprising a processor, a memory, and a program or instructions stored in the memory and runnable on the processor, the program or instructions, when executed by the processor, implementing the steps of the intra-frame prediction method according to any one of claims 1 to 13.

16. A readable storage medium, storing a program or instructions, the program or instructions, when executed by a processor, implementing the steps of the intra-frame prediction method according to any one of claims 1 to 13.

17. A chip, comprising a processor and a communication interface, wherein the communication interface is coupled to the processor, and the processor is configured to run a program or instructions to implement the steps of the intra-frame prediction method according to any one of claims 1 to 13.

18. A computer program product, stored in a non-transient readable storage medium, the computer program product being executed by at least one processor to implement the steps of the intra-frame prediction method according to any one of claims 1 to 13.

19. A communication device, configured to perform the steps of the intra-frame prediction method according to any one of claims 1 to 13.

| predModeIntra | −14 | −13 | −12 | −11 | −10 | −9 | −8 | −7 | −6 | −5 | −4 | −3 | −2 | −1 | 2 | 3 | 4 |
|---|---|---|---|---|---|---|---|---|---|---|---|---|---|---|---|---|---|
| intraPredAngle | 512 | 341 | 256 | 171 | 128 | 102 | 86 | 73 | 64 | 57 | 51 | 45 | 39 | 35 | 32 | 29 | 26 |
| predModeIntra | 5 | 6 | 7 | 8 | 9 | 10 | 11 | 12 | 13 | 14 | 15 | 16 | 17 | 18 | 19 | 20 | 21 |
| intraPredAngle | 23 | 20 | 18 | 16 | 14 | 12 | 10 | 8 | 6 | 4 | 3 | 2 | 1 | 0 | −1 | −2 | −3 |
| predModeIntra | 22 | 23 | 24 | 25 | 26 | 27 | 28 | 29 | 30 | 31 | 32 | 33 | 34 | 35 | 36 | 37 | 38 |
| intraPredAngle | −4 | −6 | −8 | −10 | −12 | −14 | −16 | −18 | −20 | −23 | −26 | −29 | −32 | −29 | −26 | −23 | −20 |
| predModeIntra | 39 | 40 | 41 | 42 | 43 | 44 | 45 | 46 | 47 | 48 | 49 | 50 | 51 | 52 | 53 | 54 | 55 |
| intraPredAngle | −18 | −16 | −14 | −12 | −10 | −8 | −6 | −4 | −3 | −2 | −1 | 0 | 1 | 2 | 3 | 4 | 6 |
| predModeIntra | 56 | 57 | 58 | 59 | 60 | 61 | 62 | 63 | 64 | 65 | 66 | 67 | 68 | 69 | 70 | 71 | 72 |
| intraPredAngle | 8 | 10 | 12 | 14 | 16 | 18 | 20 | 23 | 26 | 29 | 32 | 35 | 39 | 45 | 51 | 57 | 64 |
| predModeIntra | 73 | 74 | 75 | 76 | 77 | 78 | 79 | 80 | | | | | | | | | |
| intraPredAngle | 73 | 86 | 102 | 128 | 171 | 256 | 341 | 512 | | | | | | | | | |

# FIG. 1

FIG. 2

FIG. 3

FIG. 4

4*4

Prediction block

FIG. 5

R1

R3

R2

FIG. 6

200

Decoder

201

First determining module

202

Processing module

Obtaining module — 2021

Second determining module — 2022

Modification module — 2023

FIG. 7

300

Communication device

301 — Processor ⟷ Memory — 302

FIG. 8

EP 4 412 195 A1

FIG. 9

26

## INTERNATIONAL SEARCH REPORT

International application No.

**PCT/CN2022/120855**

### A. CLASSIFICATION OF SUBJECT MATTER

H04N 19/105(2014.01)i; H04N 19/593(2014.01)i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, CNTXT, CNKI, VEN, WOTXT, EPTXT, USTXT, WPABS, ENTXT, JVET: PDPC, 位置, 角度, 方向, 预测模式, 纹理, 梯度, 缩放因子, 反角值, position, angle, direction, predict mode, texture, gradient, scale factor, inverse angle

### C. DOCUMENTS CONSIDERED TO BE RELEVANT

| Category* | Citation of document, with indication, where appropriate, of the relevant passages | Relevant to claim No. |
|---|---|---|
| X | CN 112073720 A (TENCENT AMERICA LLC) 11 December 2020 (2020-12-11) description, paragraphs [0208]-[0268] and [0566]-[0567] | 1-3, 14-19 |
| A | CN 111937394 A (QUALCOMM INC.) 13 November 2020 (2020-11-13) entire document | 1-19 |
| A | US 2021176465 A1 (QUALCOMM INCORPORATED) 10 June 2021 (2021-06-10) entire document | 1-19 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 December 2022** | **14 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/120855**

| Patent document cited in search report | | | Publication date (day/month/year) | Patent family member(s) | | | Publication date (day/month/year) |
|---|---|---|---|---|---|---|---|
| CN | 112073720 | A | 11 December 2020 | EP | 3984216 | A1 | 20 April 2022 |
| | | | | JP | 2022153610 | A | 12 October 2022 |
| | | | | SG | 11202110392T | A | 28 October 2021 |
| | | | | CA | 3133833 | A1 | 17 December 2020 |
| | | | | US | 2020396470 | A1 | 17 December 2020 |
| | | | | KR | 20210104873 | A | 25 August 2021 |
| | | | | WO | 2020251791 | A1 | 17 December 2020 |
| | | | | JP | 2022515850 | A | 22 February 2022 |
| | | | | US | 2021250599 | A1 | 12 August 2021 |
| | | | | AU | 2020290387 | A1 | 14 October 2021 |
| CN | 111937394 | A | 13 November 2020 | US | 2019306513 | A1 | 03 October 2019 |
| | | | | CL | 2020002525 | A1 | 19 February 2021 |
| | | | | PH | 12020551366 | A1 | 01 September 2021 |
| | | | | WO | 2019195283 | A1 | 10 October 2019 |
| | | | | EP | 3772263 | A1 | 10 February 2021 |
| | | | | CO | 2020012311 | A2 | 30 October 2020 |
| | | | | TW | 201943272 | A | 01 November 2019 |
| | | | | BR | 112020019715 | A2 | 09 February 2021 |
| | | | | AU | 2019249440 | A1 | 01 October 2020 |
| | | | | KR | 20200139163 | A | 11 December 2020 |
| | | | | AR | 115330 | A1 | 23 December 2020 |
| | | | | JP | 2021520117 | A | 12 August 2021 |
| | | | | RU | 2020131995 | A | 06 May 2022 |
| | | | | SG | 11202008461S | A | 29 October 2020 |
| | | | | CA | 3092999 | A1 | 10 October 2019 |
| | | | | IL | 277064 | A | 29 October 2020 |
| US | 2021176465 | A1 | 10 June 2021 | WO | 2021119145 | A1 | 17 June 2021 |
| | | | | EP | 4074032 | A1 | 19 October 2022 |
| | | | | KR | 20220106115 | A | 28 July 2022 |
| | | | | CN | 114731394 | A | 08 July 2022 |
| | | | | TW | 202127892 | A | 16 July 2021 |

Form PCT/ISA/210 (patent family annex) (January 2015)

**REFERENCES CITED IN THE DESCRIPTION**

**Patent documents cited in the description**

- CN 202111165824